(19) Europäisches Patentamt
European Patent Office
Office européen des brevets

(11) EP 4 330 732 B1

(12) EUROPEAN PATENT SPECIFICATION

(45) Date of publication and mention of the grant of the patent:
**20.08.2025 Bulletin 2025/34**

(21) Application number: **21724217.1**

(22) Date of filing: **30.04.2021**

(51) International Patent Classification (IPC):
***G01V 1/28*** *(2006.01)* ***G01V 1/30*** *(2006.01)*

(52) Cooperative Patent Classification (CPC):
**G01V 1/282; G01V 1/308;** G01V 2210/34

(86) International application number:
**PCT/EP2021/061476**

(87) International publication number:
**WO 2022/228701 (03.11.2022 Gazette 2022/44)**

(54) **GEOPHYSICAL DATA-SPACE MINING USING A TRANS-DIMENSIONAL ALGORITHM**

GEOPHYSIKALISCHE DATENRAUMSUCHE UNTER VERWENDUNG EINES TRANSDIMENSIONALEN ALGORITHMUS

EXPLORATION D’ESPACE DE DONNÉES GÉOPHYSIQUES À L’AIDE D’UN ALGORITHME TRANS-DIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2024 Bulletin 2024/10**

(73) Proprietor: **Zed Depth Exploration Data GmbH
1190 Vienna (AT)**

(72) Inventors:
- **PIANA AGOSTINETTI, Nicola
1190 Vienna (AT)**
- **BIANCHI, Irene
1190 Vienna (AT)**

(74) Representative: **Nederlandsch Octrooibureau
P.O. Box 29720
2502 LS The Hague (NL)**

(56) References cited:
**EP-A1- 3 171 203 WO-A1-00/48022**

- **MALINVERNO ALBERTO: "Parsimonious Bayesian Markov chain Monte Carlo inversion in a nonlinear geophysical problem", GEOPHYSICAL JOURNAL INTERNATIONAL., vol. 151, no. 3, 1 December 2002 (2002-12-01), pages 675 - 688, XP055880073, ISSN: 0956-540X, DOI: 10.1046/j.1365-246X.2002.01847.x**
- **XIANG ENMING ET AL: "Efficient hierarchical trans-dimensional Bayesian inversion of magnetotelluric data", GEOPHYSICAL JOURNAL INTERNATIONAL., vol. 213, no. 3, 22 February 2018 (2018-02-22), pages 1751 - 1767, XP055879998, ISSN: 0956-540X, DOI: 10.1093/gji/ggy071**
- **CHO YONGCHAE ET AL: "Estimation and uncertainty analysis of the CO2 storage volume in the sleipner field via 4D reversible-jump markov-chain Monte Carlo", JOURNAL OF PETROLEUM SCIENCE AND ENGINEERING, ELSEVIER, AMSTERDAM, NL, vol. 200, 5 January 2021 (2021-01-05), XP086518905, ISSN: 0920-4105, [retrieved on 20210105], DOI: 10.1016/J.PETROL.2020.108333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The invention relates to the field of geophysical data analysis.

### BACKGROUND

Geophysical data are acquired and processed by service companies following a well-defined workflow: data acquisition, data analysis and interpretation in terms of physical state of the subsurface of the Earth. Two particular geophysical methods - seismic and electrical - are most commonly used.

Seismic exploration involves surveying subterranean geological media for exploitation of geo-resource, like oil and gas (or hydrocarbon) extraction, $CO_2$ storage, raw materials extraction and geothermal energy exploitation. A seismic survey typically involves deploying seismic sources and seismic sensors at predetermined locations. The sources generate seismic waves, which propagate into the subsurface volume creating pressure changes and vibrations. Variations in physical properties of the subsurface give rise to changes in certain properties of the seismic waves, such as their direction of propagation and other properties. Portions of the seismic waves reach the seismic sensors, and, in response to the detected seismic waves, the sensors generate corresponding electrical signals, known as traces, and record them in storage media as seismic data. Seismic data will include one or more "shots" (individual instance of the seismic source being activated), each of which are associated with a plurality of traces recorded at the plurality of sensors. Seismic data is processed to create seismic images that can be interpreted to identify subsurface geologic features including hydrocarbon deposits.

Applications like US 2019011583 A1, EP 3327468 A1, US 2010185422 A1, EP 3171203 A1 and WO 00/48022 A1, use different methods for provide a seismic image from seismic surveys and providing later a more accurate seismic models to make inference of elastic parameters which may improve hydrocarbon exploration and improve hydrocarbon production. A misplacement of receivers can generate distortion up to 80% of the seismic signal. Due to the relevant impact on the seismic signal, repeatability measures have been introduced to evaluate the seismic signals, like normalized root-mean square level and predictability. However, these measures must be carefully evaluated by expert-opinion and do not furnish any statistical information on the seismic signal (e.g. which are the most robust characteristics in the seismic signal to be investigated in the subsequent interpretation stage).

Other documents line Malinverno A. "Parsimonious Bayesian Markov chain Monte Carlo inversion in a nonlinear geophysical problem" Geophysical Journal International vol.151,no.3 (1 December 2002); Xiang E. et al "Efficient hierarchical trans-dimensional Bayesian inversion of magnetotelluric data", Geophysical Journal International vol.213, no.3 (22 February 2018); and Yongchae C. et al "Estimation and uncertainty analysis of the CO2 storage volume in the sleipner field via 4D reversible-jump markov-chain Monte Carlo", Journal of petroleum science and engineering, ELSEVIER, vol. 200 (5 January 2021), describe different Markov chain Monte Carlo algorithms to invert resistivity sounding data, magnetotelluric data and seismic data.

There exists a need for more accurate methods to allow better seismic data processing that will in turn allow better seismic interpretation of potential reservoirs for exploration and production.

### SUMMARY OF THE INVENTION

The object of the invention is to provide a method which automatically discriminates, in geophysical data, different sources of noise and, thus, is able to remove them from the geophysical data analysis. The present invention also improves a stage of the data analysis that is still operated manually, i.e. an expert evaluates if some data can be used in subsequent stages of the data analysis process or they must be discarded because they are too contaminated by noise, by automating the data evaluation stage. The present invention also provides a full range of probability estimates on the data, while humans can only process data in a binary mode (i.e. keep/discard).

According to the present invention, a method for geophysical data mining is provided as defined in independent claim 1.

The computer-implemented method comprising: (a) receiving, by a processor, a first survey data representative of a subsurface volume of interest and a second survey data representative of the subsurface volume of interest, wherein the first survey data and the second survey data are acquired at different survey times; wherein each of the first survey data and the second survey data comprise a plurality of data-points, wherein the plurality of data-points are arranged in a data matrix with $N_W$ columns and $N_S$ rows, each data-point of the plurality of data-points is associated to a j-th column of the data matrix representing a position $x_j$ along a x-axis and to an i-th row of the data matrix representing a position $t_i$ along a t-axis; (b) estimating, by a processor, an error distribution matrix for the plurality of data-points of the first survey data, wherein each element of the matrix is based on a standard deviation matrix and a correlation matrix of each data-point of the first

survey data; (c) generating, by the processor, a current error model by partitioning the error distribution matrix in a number of rectangular cells, wherein the current model is defined by error model parameters, and wherein the error model parameters comprise the number of rectangular cells and, for each rectangular cell of the number of rectangular cells, a position on the x-axis of the center of the each rectangular cell, a size in the x-axis of the each rectangular cell, a position on the t-axis of the center of the each rectangular cell, a size in the t-axis of the each cell, and a weight of each cell, wherein the weights define a likelihood function of the second survey data with respect to the first survey data; (d) modifying, by the processor, the error model parameters of the current error model to generate a candidate error model based on a probability condition, wherein the probability condition defines a probability of occurrence of a way of modifying the error model parameters of the current error model; (e) storing, in a memory, the error model parameters of the candidate error model as one element of a Markov Chain based on a result of comparing a likelihood value of the current error model and a likelihood value of the candidate error model, wherein both likelihood values are based on a difference between a magnitude of the data points of first survey and the second survey; (f) repeating, by the processor, steps (d) and (e) as the candidate error model being the current error model, until convergence of the Markov Chain; and (g) generating, by the processor, a probability weight map using a plurality of partition models generated by assigning a weight to each of the plurality of data-points based on the error model parameters of the candidate error models which form the Markov Chain.

The invention also relates to a computing device for geophysical data mining comprising at least one memory and at least one processor, the at least one processor configured to perform steps of a method for geophysical data mining as defined in independent claim 13.

The invention also relates to a non-transitory computer-readable medium including computer-executable instructions, wherein the instructions, when executed by a processor, implement steps of a method for geophysical data mining as defined in independent claim 14.

Advantageous embodiments are claimed in dependent claims.

## BRIEF DESCRIPTION OF THE DRAWINGS

The above and other aspects, features, and attendant advantages of the present disclosure will be more apparent and readily appreciated from the following detailed description, taken in conjunction with the accompanying drawings, in which like reference numerals refer to like elements, and wherein:

Figure 1 shows an schematic example of variables involve in the present invention.
Figure 2 shows a method for geophysical data mining.
Figures 2A-2B shows one synthetic example of a first survey data and a second survey data.
Figures 3A-3D shows one synthetic example of how the autocorrelation parameters are obtained.
Figure 4 shows ne synthetic example of a partition model using seismic survey data.
Figure 5 shows one synthetic example of a probability weight map.
Figure 6 shows a schematic overview of an example configuration of a computing device.

## DESCRIPTION OF THE INVENTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure. Accordingly, those of ordinary skill in the art will recognize that various changes and modifications of the embodiments described herein can be made without departing from the scope of the invention that is defined by the appended claims. In addition, descriptions of well-known functions and constructions may be omitted for clarity and conciseness.

The expression "configured to (or set to)" as used herein may be used interchangeably with "suitable for" "having the capacity to" "designed to" "adapted to" "made to," or "capable of" according to a context. The term "configured to (set to)" does not necessarily mean "specifically designed to" in a hardware level. Instead, the expression "apparatus configured to..." may mean that the apparatus is "capable of..." along with other devices or parts in a certain context.

Geophysical data is processed to create geophysical images that can be interpreted to identify subsurface geologic features including hydrocarbon deposits. For example, seismic data is processed to create density images of the subsurface.

Geophysical data is generally obtained during a geophysical survey. For example, a seismic survey typically involves deploying seismic sources and seismic sensors at predetermined locations. The sources generate seismic waves, which propagate into the subsurface volume creating pressure changes and vibrations. Variations in physical properties of the subsurface give rise to changes in certain properties of the seismic waves, such as their direction of propagation and other properties. Portions of the seismic waves reach the seismic sensors, and, in response to the

detected seismic waves, the sensors generate corresponding electrical signals during a period of time, known as traces, and record them in storage media as seismic data.

While investigating the Earth system, geo-scientists have to deal with two complementary spaces: data space and model space. The model space is generally defined as the space of the investigated parameters of the subsurface (e.g. density, electrical resistivity, etc.). For a given parameterization of the system, each point of the model space maps a possible model of the system, and it is represented by a combination of values of the model parameters. To make inferences on the model parameters, measurements of relevant geo-observables (i.e. parameters and/or magnitudes that are measurable by receivers) are taken. The data space contains all the possible combinations of such observations and the measured data points form a local subset of the data space with its own structure.

While there is a count-less literature about methodologies for investigating the model space, few attempts have been done for a systematic exploration of the data space. Exploration of the data space is an ordinary activity for geoscientists, and includes, for example, data preparation, quality assurance and quality control (QA/QC) for data selection and estimate of data errors. Some of those activities, for example the data selection, could have a strong impact on the data space, modifying, for example, on the data structure. Such activities rely on the expert-opinion of the geoscientists and are carried out ahead of the main geophysical investigations that are related to the model space.

There are two main reasons for considering the systematic exploration of the data space. First, the ever-growing amount of geo-data available to geoscientists needs to be tackled with more automated workflows, where expert-opinion is generally a time-consuming process. More interesting, expert-opinion, as a human activity, implies to work with categories (discrete number of outputs) rather than a more general continuous evaluation of probability. For example, in data selection activities, the expert can select and, then, exclude part of the data based on her/his experience, following a two categories model (in/out, good/bad). Conversely, a more automated workflow, developed in a statistical framework, can associate a probability value to each data point, avoiding to remove any of them from the analysis.

Some studies reported cases of systematic exploration of the data space, even if such analyses take often a marginal roles in the scientific studies themselves. In particular, there are some examples where Bayesian inference has been applied to geophysical inverse problem for defining both physical parameters (i.e. investigating the model space) and the errors associated to the data (i.e. exploring the data space), the so called Hierarchical Bayes approach. In Hierarchical Bayes algorithms, the uncertainties related to the data are assumed to be poorly known and need to be estimated during the process. This approach usually assumes a fixed number of parameters which represents the unknown part of the data space. In most applications of the Hierarchical Bayes approach, the absolute value for data errors is considered as unknown in the problem and need to be inferred. Sometimes, in cases where the structure of the data errors is known (i.e. we know which data points have been measured with more precision with respect to other data points), a scaling factor of the data error is used as unknown. In more complex cases, the Hierarchical Bayes approach is adopted to somehow define a function of the data uncertainties, so called "data structures" or "states" hereinafter, which include: estimating the auto regressive model of the data errors (i.e. a form of errors correlation), and estimating an increasing linear model for the data errors as a function of the on geometrical distance between measurement points. In all these cases, however, the number of parameters representing the data structure is fixed a-priori (usually one or two parameters, rarely more than three).

In the present invention, a step forward is provided in the development of algorithms for data space exploration. A trans-dimensional (trans-D) sampler is used for exploring different "states" (represented by a different number of variables), where each state reproduce a partition of the data space (i.e. a data structure). The number of states to be explored is no more strictly limited, and the number of variables representing such states can vary between a minimum and maximum. For example, an state (or a model) can have a number of groups, and each group being identified by some parameters, like a position of their centres and their extensions or sizes. From a data-mining perspective, the novelty of present invention which belongs to the family of clustering algorithms in Bayesian Data Analysis, resides in the possibility of having an unknown number of clusters (also called partitions or cells), and the number of clusters is fully data-driven and not set a-priori by the user. As a consequence, the number of clusters or cells could also be zero. In the rest of the description, the terms cell, group, cluster and partition will be interchangeably used.

In an embodiment of the present invention, a method performing such algorithm is developed in a Bayesian framework, for defining posterior probability of the data structures. Data space structures can be expressed in terms of partitions of the covariance matrix of the errors, which allows to define the regions of the data space where measured data are in agreement with a given working hypothesis. The algorithm is applied to the data analysis workflow used for geophysical data mining, a technology mainly used for monitoring reservoirs. The geophysical data consist of time-repeated geophysical surveys that need to be investigated for detecting noise/distortions and focusing the subsequent geophysical inversion on the portion of geophysical data where temporal changes occurred.

The geophysical workflow consists of three main phases: acquisition, processing and interpretation. Briefly, a first geophysical data survey is performed just before starting the exploitation of the reservoir, the so called first data survey or baseline data survey, to get a picture of the untouched resources. After some time, the geophysical data survey is repeated, the so called second data survey or monitor data survey. If the geophysical acquisition in the field is repeated exactly in the same way as during the baseline data survey, as well as the data processing, the differences between the

new picture of the reservoir and the old one can be uniquely attribute to the changes in the physical properties of the reservoir, due to its exploitation. Through the analysis of such differences, the management staff can take informed decisions about the next phases of exploitation of the reservoir.

Production related effects on the picture obtained from the monitor data survey can be obscured by distortions induced by the lack of repeatability of the data acquisition and processing. This is one of the main technical barriers for getting the correct information from geophysical data. The concept of repeatability between two or more geophysical data surveys indicates the degree at which the data-sets can be considered generated from the same operational and computational workflow. Measures of repeatability between two geophysical data surveys generally include Normalized Root Mean Square (NRMS) and traces correlation (also called predictability). Increasing and evaluating repeatability of geophysical data have been the focus of a number of studies in the last decades, and the main efforts have been done in increasing acquisition quality, i.e. hardware solutions. Statistical approaches to geophysical data analysis have been limited to the interpretation phase.

The term Bayesian inferences collectively indicates all those procedures that make some use of Bayes's theorem, where a quantitative relation is introduced for linking previous, already established, knowledge to new observations. The results are given in terms of probability for a given investigated parameter to have a certain value (i.e., a probability distribution over the physically consistent values of a parameter. Called m a vector of investigated or model parameters (i.e., a model), this relation can be expressed as in equation 1. For example, the vector of model parameters m can represent a number of groups in an area or volume, and their positions and extensions in the area or volume.

$$p(\mathbf{m}|\mathbf{d}) = \frac{p(\mathbf{m})p(\mathbf{m}|\mathbf{d})}{p(\mathbf{d})} \qquad \text{[equation 1]}$$

where $p()$ is a probability distribution, $\mathbf{m}|\mathbf{d}$ indicates conditional dependence (i.e., **m** given **d**), and **d** denotes the observed data. Thus, $p(\mathbf{m}|\mathbf{d})$ is called posterior probability distribution (PPD) and is our target distribution, $p(\mathbf{m})$ is called prior probability distribution (or simply prior), and the term $p(\mathbf{d}|\mathbf{m})$ is the likelihood function (also known as $L(\mathbf{m})$), which measures the accordance of the model to the new observations (technically the conditional probability of the data given the model). The normalization factor $p(\mathbf{d})$ represents the probability associated with the data, which is independent of the model parameters and is usually treated as a constant.

Thus, differently from other approaches, the solution of the geophysical inverse problem is given in the form of a probability distribution over the investigated parameters, and not as a single value for each parameter (i.e. a single model). In simple cases, Bayes' theorem can give an analytic solution to geophysical inverse problems. However, numerical methods have been widely used in more complex cases. In particular, Markov chain Monte Carlo (McMC) sampling has been found well suited for sampling a chain of Earth models with a probability proportional to the PPD and, thus, to make inferences on relevant parameters based on such sampled models.

In the present invention a sampler of the prior probability distribution is developed which can be "switched" to sample models with a probability that follows the PPD. After collecting a relevant number of models from the PPD, numerical estimators of the investigated parameters are directly computed from the sampled models. For example, the mean value of the parameter m, can be estimate as

$$\widehat{m} = \frac{1}{N}\sum_{j}^{N} m_j \qquad \text{[equation 2]}$$

where N is the number of samples collected during the McMC sampling and $m_j$ is the value of parameter m for the j-th model sampled.

Markov chain is a systematic method for generating a sequence of random variables where the current value is probabilistically dependent on the value of the prior variable. Monte Carlo is a technique for randomly sampling a probability distribution and approximating a desired quantity. Combining these two methods, Markov Chain and Monte Carlo, allows random sampling of high-dimensional probability distributions that honors the probabilistic dependence between samples by constructing a Markov Chain that comprise the Monte Carlo sample. Specifically, McMC is for performing inference (e.g. estimating a quantity or a density) for probability distributions where independent samples from the distribution cannot be drawn, or cannot be drawn easily. For example, in the present invention McMC sampling allows to obtain a number of models defined by model parameters (m) by randomly modifying such parameters (**m**) and comparing a likelihood function of a model defined by the model parameters with a likelihood function of a model defined by the modified model parameters. These steps are defined later in the description.

The PPD is sampled in two steps: first, a candidate model $\mathbf{m}_{cand}$ is proposed from the prior probability distribution,

following a random walk especially designed for sampling the prior distributions. In the second step, the candidate model is accepted or rejected according to the ratio between the likelihood of the candidate model and the likelihood of the current model $\mathbf{m}_{cur}$. That is, the candidate model is a model obtained by modifying the model parameters of a previous obtained model, i.e. the current model, and then the candidate model is accepted or rejected based on a comparison between the likelihood of the candidate model and the current model.

The probability of accepting a new model along the Markov chain is defined as:

$$\alpha = \min[1, L(\mathbf{m}_{\text{cand}})/L(\mathbf{m}_{\text{cur}})] \quad \text{[equation 3]}$$

where $\mathbf{m}_{cand}$, the candidate model, and $\mathbf{m}_{cur}$, the current model, are two consecutive Earth models along the Markov chain and L(m) is the likelihood of the model given the observed data. In other words, the candidate model is always accepted if $L(\mathbf{m}_{cand}) \geq L(\mathbf{m}_{cur})$. If $L(\mathbf{m}_{cand}) < L(\mathbf{m}_{cur})$, the random walk moves to the candidate model with probability equal to $L(\mathbf{m}_{cand})/L(\mathbf{m}_{cur})$. The last point, $L(\mathbf{m}_{cand}) < L(\mathbf{m}_{cur})$, guarantees the McMC sampler not to be stuck in a local maximum of the Likelihood function, because models which worsen the fit to the data still have a possibility of being accepted.

Two fundamental points in Bayesian inferences are the initial states of knowledge about the investigated parameters, so called priors or $p(\mathbf{m})$, which can take a closed analytical form, or being represented by a set of rules (e.g. one parameter has to be smaller than a second parameter, like in P- and S-waves velocities in rocks). More interesting, the statistics of the data uncertainties should be known at a certain level. Such statistics are used to compute the likelihood value of an Earth model. Simplified statistics can be adopted (e.g. a diagonal covariance matrix in Gaussian distributed errors) but have been proven to give un-realistic results in some cases. Both these elements have to be assumed before making inferences on physical parameters and, given the Equation 1, the solution to the geophysical inverse problem could change under different assumptions.

An efficient design of the McMC sampler is fundamental for achieving robust results (in terms of number of samples extracted from the PPD) in a limited amount of time. Several different recipes have been designed in the past for proposing a candidate model, i.e. a new point in the model space, as a perturbation of the current model, i.e. the last visited point in the model space. In fact, if the sampling is too limited to the neighbor of the current model (the neighbor of the current model being a model obtained by model parameters which are almost similar to the model parameters of the current model), the McMC will converge too slowly the global maximum of the likelihood function. Conversely, too strong perturbation of the current model will likely lead to very poor fitting candidate models, which will be mostly rejected. In recent years, one ingredient that has been added to many implementations of the McMC sampler is the possibility of sampling a candidate model which has a different number of variables with respect to the current model. The present invention relaxes the hard constrain of a fixed number of variables in the models, leaving it to vary between a maximum and a minimum. This new generation of McMC samplers are called trans-dimensional samplers.

In the description below, the same reference numbers in the drawings refer to the same elements/components.

Figure 1 shows an schematic example of variables involve in the present invention. Figure 1 shows a space data 1 defined by two axis, i.e. x-axis and t-axis. Geophysical survey data 4 comprises a plurality of data-points. Each data-point 2 corresponds to a j-th column 2a (e.g. column 134) and a i-th row 2b (e.g. row 564). The j-th column corresponds to a position 1a on the x-axis (e.g. 200 meters). The position 1a on the x-axis is also referred as $x_j$. The i-th row corresponds to a position 1b on the t-axis (e.g. 346 μs). The position 1b on the t-axis is also referred as $t_i$. The space data 1 can be divided or partitioned in cells. Each cell 3 is defined by a position 3a of its centre 3c on the x-axis, a position 3b of its centre 3c on the t-axis, a size 3e measured on the x-axis, and a size 3d measured on the t-axis.

Figure 2 shows a method 10 for geophysical data mining.

The method 10 starts at step 100 in which a first survey data representative of a subsurface volume of interest and a second survey data representative of the subsurface volume of interest are received, wherein the first survey data and the second survey data are acquired at different survey times.

The first survey data and the second survey data are acquired at different survey times (i.e. time-lapse surveys). By acquiring the first survey data and the second survey data at different survey times, changes in the subsurface volume of interest can be detected. For example, if the subsurface volume comprises an oil or gas reservoir, by acquiring the first survey data and the second survey data at different survey times, changes in the reservoir can be detected. For example, the first survey data is acquired at a specific time and the second survey data is acquired years after the specific time. For example, the second survey data is acquired 2, 3, 4, 6, 8 years after the first survey data was acquired.

Since the first survey data and the second survey data are acquired at different survey times, the initial or baseline surface can refer to the first survey data, and the subsequent or monitoring survey can refer to the second survey data.

The first survey data and the second survey data are both data collected using a geophysical survey method. There is a number of different geophysical survey methods, including seismic methods, electrical method, electromagnetic methods, gravitational methods, and the like.

Optionally, the first survey data and the second survey data can be a first seismic survey data and a second

seismic survey data, respectively. That is, the first survey data can be a seismic baseline survey data and the second survey data can be a seismic monitoring survey data.

The first survey data and the second survey comprises a plurality of magnitudes (so-called "data-points"). The magnitudes may depend on the geophysical survey method used for acquiring the survey data. For example, the magnitude may represent an amplitude of a seismic wave, a voltage, etc. The plurality of magnitudes of a geophysical survey can be arranged conveniently in a data matrix, so-called data matrix, with $N_W$ columns and $N_S$ rows.

For example, measured amplitudes of a seismic survey data can be arranged conveniently in a data matrix, with each column representing a record (i.e. a trace) and each row representing a receiver gather. Hence, a trace is one of a recorded or pre-processed element composing the seismic data survey recorded at a specific position, which represents the position of the receiver. Columns in the data matrix, which represent the traces, are organized such that consecutive traces represent traces recorded at two consecutive receivers aligned in one direction (e.g. x and/or y directions), and rows in the data matrix are organized such that consecutive sampling times were recorded at two consecutive times.

For example, measured voltages of an electrical survey data can be arranged conveniently in a data matrix, with each column representing a position along a direction (e.g. on the surface) and each row representing a position in another direction (e.g. depth from the surface, distance between electrodes, etc.). Depending on the electrical survey method used, each columns can represent a position of receivers or a midpoint between source and receiver, or any other position between sources and/or receivers.

Each of the first survey data and second survey data comprises a plurality of data-points (i.e. magnitudes), the plurality of data-points are arranged in a data matrix with $N_W$ columns and $N_S$ rows, wherein a j-th column represents a position $x_j$ along a x-axis (e.g. x-direction on the Earth surface) and i-th row represents a position $t_i$ along a t-axis (e.g. time or depth). Thus, each of the first survey data and the second survey data comprises Nw x Ns data-points.

One synthetic example of a first survey data and a second survey data, acquired using a seismic survey method, is illustrated in Figures 3A and 3B. Figure 3A shows the first survey data (or baseline survey data) of a subsurface volume in which amplitudes of seismic waves are represented in a grey-color scale. Figure 3B shows the second survey data (or monitoring survey data), of the same subsurface volume, in which amplitudes of seismic waves are represented in a grey-color scale. Back lines (continuous and dotted) in Figures 3A and 3B indicate seismic waves arrivals of surface waves (310a,310b) and reflection waves at a reservoir top (320a,320b) of the first survey data and the second survey data.

The method 10 further comprises estimating an error distribution of each of the plurality of data-points of the first survey data (step 110).

If the second survey data acquisition, during the second survey, is repeated exactly in the same way as during the first survey, as well as the data processing, the differences between the second survey data representative of a subsurface volume (e.g. a reservoir) and the first survey data representative of the same subsurface volume can be uniquely attribute to the changes in the physical properties of the subsurface volume due to its exploitation. Through the analysis of such differences, the management staff can take informed decisions about the next phases of exploitation of the subsurface volume.

However, production related effects on a picture obtained from the second survey data can be obscured by distortions induced by the lack of repeatability of the data acquisition and processing. The concept of repeatability between two or more surveys indicates the degree at which the data can be considered generated from the same operational and computational workflow. Hence, an error distribution of the first survey data and the second survey data is needed.

To rigorously compare the first survey data and the second survey data, it is necessary to know how the errors are statistically distributed in the two data sets. Since both the first survey data and the second survey data comprises a number of data points equal to Nw multiplied by Ns, an error distribution of the first survey data and the second survey data may forms a matrix having $(Nw\cdot Ns)\times(Nw\cdot Ns)$ elements, i.e., a matrix having a number of rows equal to Nw multiplied by Ns and a number of columns equal to Nw multiplied by Ns, and such matrix could be un-tractable, i.e. no easy to control or work with, computationally.

In one embodiment of the present invention, in order to have an error distribution represented by a tractable matrix, a covariance matrix is obtained by considering the following two assumptions. The first assumption is not to consider inter-trace correlation (i.e. near-by traces are not correlated wherein near-by traces refer to traces taken receptors located physically near-by), so the covariance matrix is a block-diagonal matrix, one block for each trace. The first assumption could be un-realistic under some acquisition condition, e.g. weather conditions or the like. For example, weather conditions can affect traces recorded in the same area in the same way thus producing correlated noise between near-by traces.The second assumption is considering the same error statistics for the first survey data and the second survey data. The second assumption could be partially false for, e.g., surveys acquired with a large survey time, e.g. 10 years or more. For example, after 10 years, the equipments used for acquiring the first and the second survey data are likely to have different precision.

In one embodiment of the invention, a covariance matrix (**C***) is obtained based on a diagonal matrix (**S**) and a correlation matrix (**R**). The covariance matrix is given by:

$$\mathbf{C}^* = \mathbf{S} \cdot \mathbf{R} \cdot \mathbf{S} \quad \text{[equation 4]}$$

The diagonal matrix (**S**) is calculated based on a standard deviation ($\sigma$) of each data-point of the first survey data. The diagonal matrix (**S**) is given by:

$$\mathbf{S} = \begin{pmatrix} \sigma_{1,1} & 0 & 0 & \dots & 0 \\ 0 & \sigma_{2,1} & 0 & \dots & 0 \\ 0 & 0 & \sigma_{3,1} & \dots & 0 \\ \vdots & \vdots & \vdots & \vdots & \vdots \\ 0 & 0 & 0 & \dots & \sigma_{N_s,N_w} \end{pmatrix} \quad \text{[equation 5]}$$

wherein the element $\sigma_{i,j}$ represent the standard deviation of a data-point (i.e. magnitude) in a j-th column representing a position $x_j$ along a x-axis (e.g. x-direction on the Earth surface) and in a i-th row representing a position $t_i$ along a t-axis (e.g. time axis or depth axis) of the first survey data.

The correlation matrix (**R**) is calculated based on an error correlation within each trace. The correlation matrix (**R**) is a block-diagonal matrix, comprising a number of blocks equal to $N_w$, and wherein a block $\mathbf{R}_j$ represents an error correlation within the j-th trace.

In one embodiment of the present invention, the first survey data is a first seismic survey data and the second survey data is a second seismic survey data. In this case, the block $\mathbf{R}_j$ ,with elements $R_{ik,j}$ is given by

$$\boldsymbol{R}_j = R_{ik,j} = e^{-\lambda_j |t_i - t_k|} cos(\lambda_j \omega_j |t_i - t_k|) \quad \text{[equation 6]}$$

where j represent a j-th column among the Nw columns in the first survey data; $t_k$ and $t_i$ are the k-th row and i-th row, respectively, of the j-th column (where I and k varies from 1 to Ns), respectively; $\lambda_j$ and $\omega_j$ are autocorrelation parameters of data-points in the j-th column obtained by considering data-points of a number of consecutive columns around the j-th column.

The number of consecutive traces around the j-th column is a number between 4 and 10. A lower number may imply that the autocorrelation parameters are not well-calculated, and considering more than 10, implies that distant distortions may wrongly affect the calculation of the autocorrelation parameters.

Alternatively, different equation for obtaining the block of the correlation matrix can be used with dependence of the geophysical survey method used for acquiring the first survey data and the second survey data.

One synthetic example of how the autocorrelation parameters are obtained is illustrated in figures 4A-4D. Figure 4A shows an example in which the trace 155 is considered (i.e. j=155). For the trace j=155, a number of near-by traces are considered, e.g. 5 traces before and 5 traces after the trace j. That is, given a trace j, traces considered for the autocorrelation are the traces between j - 5 and j + 5. Figure 4B shows a stack (continuous line) and standard deviation (grey zone around the stack) for the traces considered (trace 155 and near-by traces). Figure 4C shows residuals between the stack and each single trace considered (trace 155 and near-by traces). From the stack, residual is computed for each trace considered and, then, the residuals are autocorrelated. Figure 4D shows the auto-correlation function of each of the residuals. The autocorrelation functions are stacked to obtain an average autocorrelation function. This function is used to estimate $\lambda_j$ and $\omega_j$ (darkest line in Figure 4D), through a 2-parameters grid search.

Exploring the first survey data and the second survey data (i.e. data space) implies the separation of multiple external sources for signals received at the receivers (e.g. the signal arising when second and first survey data differs). A simplified case is considered using three external signal sources: ambient random noise (noise, hereinafter), sensor misplacement (distorsion) and physical changes in the subsurface volume (target signal). In the situation of perfect survey repetition (no sensor misplacement) and no change in the subsurface volume, the unique source of signal is the noise. In the case of a unique source of signal from the noise, the likelihood of the second survey data with respect to the first survey data should be equal to one, where the likelihood function is statistically represented by:

$$L(\boldsymbol{m}) = p(\boldsymbol{d} \mid \boldsymbol{m}) = \prod_{i=1}^{N_w} \frac{1}{[(2\pi)^{N_s} |\boldsymbol{C}^*_{e,ij}|]^{1/2}} exp\left(-\frac{1}{2} \boldsymbol{e}^T_{ij} \boldsymbol{C}^*_{e,ij}{}^{-1} \boldsymbol{e}_{ij}\right) \quad \text{[equation 7]}$$

where the covariance matrix $C^*_{e,ij}$ is directly estimated by the data through their autocorrelation and their standard deviation, $e_{ij}$ is a difference between the magnitude of the data-point of first survey and the second survey at the i-th column and j-th row.

In case of signals in the survey data caused by different sources, a Hierarchical Bayes approach is adopted to define a different configuration of the covariance matrix so that the new covariance matrix will closely fit again the error model and the working hypothesis defined by Equation 7.

Modifications to the covariance matrix obtained through a Hierarchical Bayes algorithm not only represent improved estimates of the data uncertainties, but also include any additional source of uncertainty arising from, e.g., unrealistic modelling or, wrong assumptions. In fact, the Likelihood function in Equation 7 does represent the differences in the two surveys in case of noise only, and the covariance matrix needs to be modified appropriately when such hypothesis is violated. In case of sensor misplacement (i.e. when errors occur in the geometry of the monitor survey), the modification of the covariance matrix should be the same for all the points belonging to the misplaced traces. Conversely, when changes in the reservoir occur, the covariance matrix needs to be modified only for those data-points generated at the top of the reservoir for some consecutive traces. Hence, a different structure for the covariance matrix is needed so that the modified covariance matrix will approximate the error model.

Referring back to Figure 2, the method 10 further comprises generating a model (e.g. a current error model or $\mathbf{m}_{cur}$) by partitioning the error distribution in a number of cells (step 120). By separating regions of the data space, distortions in the covariance can be also separated. Given the properties of the covariance matrix and assigning a relevant weight to each data-point in the space data, a modified covariance matrix is determined as:

$$\boldsymbol{C_{e,ij}(m) = W(m)C^*_{e,ij}W(m)} \quad \text{[equation 8]}$$

where

$$\boldsymbol{W_{ij}(m)} = 10^{w_{ij}(\boldsymbol{m})} \quad \text{[equation 9]}$$

and $w_{ij}$ is a weight associated to sample point $(x_j, t_i)$, derived by the model sampled along the McMC. Noteworthy, assumptions on the original covariance matrix (block-diagonal matrix generated from a autocorrelation function) are not necessary for generating the modified covariance matrix $\mathbf{c}_{e,ij}$. Thus, the following discussion can be generalized to any covariance matrix.

The goal now is to generate sensible weights for all data-points, to be able to separate the portion of second survey where the signal follows the likelihood in Equation 7 from the signal where other distortions are present.

Given the nature of the distortions considered, it can assume that, in case of misplacement of one sensor or receiver, all the weights associated to the corresponding trace have to be modified of the same amount. This means that, for a given j-th position (e.g. a j-th trace), the weights $w_{ij}$ would be the same for one entire block along the diagonal of the covariance matrix (C*), associated to the misplaced trace. Conversely, in case of a change in the subsurface volume (e.g. a reservoir), all weights associated to the same j-th column (e.g. seismic phase or depth) need to be homogeneously modified. Thus, $w_{ij}$ would be the same for the same i-th row (e.g. time interval) across different j-th columns. This second kind of distortion strongly impacts the covariance matrix, modifying at same extent many blocks along its diagonal. Having homogeneous weights for different portions of the covariance matrix, a partition of the covariance matrix can be created based on the correspondent partition of the space data associated to the relevant distortion.

In an embodiment of the present invention, the covariance matrix can be partitioned in rectangular partitions of the data-space, the data-space being represented by the positions $x_i$ and $x_t$ of the plurality of data-points. The current model is represented then by a variable number of rectangular patches (so called "cells" or groups) that at least partially cover the data-space, where at each patch is associated to a constant weight.

Cells can be rectangular cells or can have any other shape. Rectangular cells are optimal in case of vertical and horizontal anomalies, because trans-D sampler can easily mimic such kind of distortions with a limited number of cells. However, all models sampled from the PPD will have vertical and horizontal boundaries, thus generating a somehow "blocky" PPD. In case of more complex, i.e. dipping, anomalies, a more general function of the PPD can be adopted, for example "anisotropic gaussian kernels.

The current model (so-called $\mathbf{m}_{cur}$) is defined by model parameters which comprises a scalar n and five n-vectors. The model parameters comprises the number of cells (so-called n), a $x_i$ position (in the x-axis of the data-space) of the center of each cell (so-called $c_n$), a size measured in the x-axis of each cell (so-called $r_n$), a $x_t$ position (in the t-axis of the data-space) of the center of each cell (so-called $t_n$), a size measured in the t-axis of each cell (so-called $s_n$), and a weight of

each cell (so-called $\pi_n$). Therefore, the relevant weight of each data-point of the data space is the sum of the weights of the cells that extend to cover such point, as given by:

$$w_{ij}(\boldsymbol{m}) = \sum_{m=1}^{n} \pi_m \qquad if \qquad x_{ij} \in \mathcal{C}_m \qquad \text{[equation 10]}$$

where $\mathcal{C}_m$ represents a space extension in the space data of a m-th cell, i.e.:

$$x_{ij} \in C_m \Leftrightarrow \begin{cases} c_n - \frac{1}{2} \cdot r_m < x_i < c_n + \frac{1}{2} \cdot r_m \\ t_n - \frac{1}{2} \cdot s_m < x_j < t_n + \frac{1}{2} \cdot s_m \end{cases} \qquad \text{[equation 11]}$$

where a data-point (i-th row and j-th column) represented in the space data by $x_{ij}$ ($x_j$, $t_i$) belongs to the $\mathcal{C}_m$ cell when equation 11 is satisfied.

Hence, the weights define the likelihood of the model from equation 7 substituting the covariance matrix ( $\boldsymbol{C}^*_{\boldsymbol{e,ij}}$ ) with the modified covariance matrix ($\boldsymbol{C}_{e,if}$), as:

$$L(\boldsymbol{m}) = p(\boldsymbol{d} \mid \boldsymbol{m}) = \prod_{i=1}^{N_W} \frac{1}{[(2\pi)^{N_S}|\boldsymbol{C}_{\boldsymbol{e,ij}}|]^{1/2}} exp\left(-\frac{1}{2} \boldsymbol{e}_{\boldsymbol{ij}}^{\boldsymbol{T}} \boldsymbol{C}_{\boldsymbol{e,ij}}{}^{\boldsymbol{-1}} \boldsymbol{e}_{\boldsymbol{ij}}\right) \qquad \text{[equation 12]}$$

Differently from standard McMC schemes, in equation 12 the dependence of the likelihood function on the model is solely expressed in the covariance matrix and not in the residuals.

To make Bayesian inferences about the data partitions, an appropriate prior probability distributions on the model parameters is defined. An uniform probability distributions between minimum and maximum values for all modeled parameters is used. Exemplary minimum and maximum values are reported in Table 1. Alternatively, other values that the reported in Table 1 can be used. Uniform priors have several advantages from a computational point of view, and keep the number of prior information at a minimum (two values per parameter). In the present invention it is not impose any constrain on the parameters defining the size of the cells (i.e. $r_n$ and $s_n$) for cell centers approaching the boundary of the space data, i.e. some cells could span outside the space data (this is the reason because some cells seem to have their centers not exactly in the mid of the cells in Figure 4).

One synthetic example of a model (m) using seismic survey data is illustrated in Figure 5. Rectangles represent the different data-point belonging to different cells, according to their weights. The model of Figure 5 comprises 5 cells (n=5). A cell 500 (e.g. $\mathcal{C}_2$) as its center 510 at positions 511 in the x-axis ($c_n$) and 512 in the t-axis ($t_n$), and the cell 500 has a size 520 measured in the x-axis ($r_n$), and a size 530 measured in the t-axis ($s_n$). The cell 500 has a weight $\pi_n$. Where cells overlap, weights are summed up. Each data-point (dots) has an associated a weight $w_{ij}$. Data-points outside all cells have been associated to a weight equals to 0.

While this assumption can introduce some combination of parameters with very limited impact on the likelihood function (e.g. when $c_m$ is close to one or close to $N_W$ and $r_m$ is small), the parsimony of the trans-D approach guarantees that useless cells are removed from the model at some point, avoiding to keep too many cells.

Table 1: Uniform prior distributions of model parameters in vector m.

| Model parameter | Minimum | Maximum |
|---|---|---|
| Number of cells, n | 1 | 200 |
| Cell center along x-axis, $c_n$ | 1 | 20 |
| Cell size in the x-axis, $r_n$ | 1 | 10 |
| Cell center along t-axis, $t_n$ | 1 | 1251 |
| Cell size in the t-axis, $s_n$ | 1 | 625 |

(continued)

| Model parameter | Minimum | Maximum |
|---|---|---|
| Weight, $\pi_n$ | 0.0 | 1.0 |

Referring back to Figure 2, the method 10 further comprises modifying the error model parameters of the current error model to generate a candidate error model based on a probability condition (step 130).

How to progress in the McMC sampling, i.e. how to propose a new candidate error model to be compared to the current one, is the so-called recipe. Defining an efficient recipe, in terms of convergence to the global maximum(s) of the likelihood function and ability to explore a (potentially) multi-modal distribution, is fundamental for keeping the computational resources needed within a feasible limit.

In one embodiment of the present invention, the error model parameters of the current error model are modified by performing a move among a list of moves, wherein each move has a probability to occur (that it is also called a probability condition). The list of moves comprises seven moves, each of which represents a different way of perturbing the current error model. Moves are selected with a different probability.

The list of moves and their probability to be selected are the following:

a. modifying a position in the x-axis of the center of one cell ($c_n$), which has a probability condition to occur equal to 0.15,
b. modifying a size measured in the x-axis of one cell ($r_n$), which has a probability condition to occur equal to 0.15,
c. modifying a position in the t-axis of the center of one cell ($t_n$), which has a probability condition to occur equal to 0.15,
d. modifying a size measured in the t-axis of one cell ($s_n$), which has a probability condition to occur equal to 0.15,
e. modifying the weight of one cell ($\pi_n$), which has a probability condition to occur equal to 0.2,
f. adding a new cell, which has a probability condition to occur equal to 0.1, and
g. deleting one cell, which has a probability condition to occur equal to 0.1.

Alternatively, a different list of moves can be used or a different probability condition to occur than the probability condition to occur of the list above can be used.

Referring back to Figure 2, the method 10 further comprises storing the error model parameters of the candidate error model as one element of the Markov Chain based on a result of comparing a likelihood value of the current error model and a likelihood value of the candidate error model (step 140).

The method 10 further comprises repeating steps 130 and 140 with the candidate error model being the current error model, until convergence of the Markov Chain (step 150).

As previously explained in relation to Equation 3, a candidate model is always accepted as an element of a Markov Chain if $L(\mathbf{m}_{cand}) \geq L(\mathbf{m}_{cur})$. By modifying the error model parameters based on the probability condition (or a probability of performing a move), the likelihood function of the error model based on the modified error model parameters will convergence to a global maximum of the Likelihood function. That is, the convergence is to a stationary distribution of a Markov chain. Once the convergence is reached, the method stops performing the modification of the error model parameters.

The method 10 further comprises generating a probability weight map using partition models (W) generated by assigning a weight to each of the plurality of data-points based on the error model parameters of the candidate error models which form the Markov Chain.

One synthetic example of weights associated to the plurality of data-points is illustrated in Figure 6, with reference to a first seismic survey data and a second survey data, wherein a weight wij is assigned to each data-point based on error model parameters. Posterior standard deviation of wij is shown as contour lines.

Figure 7 shows a schematic diagram of an example configuration of a computing device 700 for geophysical data mining. The computing device 700 comprises a bus 710, a processor 720, a memory 730, a I/O interface 740, a output unit 750, a input unit 760. The computing device 700 can comprise other elements as,
The bus 710 is a circuit for connecting the above-described elements, and transferring communication between the above-described elements.

The processor 720 can receive an instruction from the above-described other elements via the bus 710, decipher the received instruction, and execute an operation or a data processing corresponding to the deciphered instruction. For example, the processor can execute an operation of the above described method 10 for geophysical data mining. The processor 720 may comprise a Central Processing Unit, CPU, which may be connected to an input unit 730, memory 740, an output unit 750, and a communication module 760. Input unit 730 may comprise any known device to allow an operator to generate data and instructions for CPU, like a keyboard, a mouse, one or more touch screens, etc.

The memory 730 can store an instruction or data received from the processor 720 or from other above-described elements or generated by the processor 720 or by the other above-described elements. The memory 730 can comprise

any suitable known memory devices to store data and computer programs to be run on the processor 720, and may include any known type of volatile and non-volatile memory equipment, random-access memory (RAM) and read-only memory (ROM) types of memories, etc. The memory 730 can include, for example, programming modules such as a kernel, a middle ware, an Application Programming Interface (API) or an application. Each of the above programming modules can include software, firmware, hardware, or a combination of at least two or more of these.

The I/O interface 740 transfers an instruction or data input from a user via the input unit 760 to the processor 720, the memory 730, or the communication interface 770, for example, via the bus 710. The I/O interface 740 allows a user to provide touch data input via a touchscreen to the processor 720. Also, the I/O interface 740 can output an instruction or data received from the processor 720, the memory 730, or the communication interface 770 via the bus 710.

The output unit 750 displays information (e.g., multimedia data or text data, etc.) to a user or output sounds to the user. The output unit 750 can comprise any suitable output device to output data to an operator including a display, a speaker, etc.

The input unit 760 may receive an instruction or data from a user. The input unit can comprise any suitable input device to input data including a sensor, a keyboard, a touch panel, a digitizer, a USB connector, a microphone, etc.

The communication module 770 is configured to transmit signals to and receive signals from equipment outside the computing device 700. Any known and suitable transceiver equipment can be used for that purpose using any known or still to be developed (standard) communication technique including 2G, 3G, 4G, 5G, Wifi, Bluetooth, NFC, etc. To that end communication module is connected to a network and an antenna.

Each of the above elements of the computing device according to an embodiment of the present disclosure can be configured using one or more components, and a name of a relevant element may change depending on the kind of the computing device. The computing device according to an embodiment of the present disclosure can include at least one of the above elements, and a portion of the elements can be omitted or additional other elements can be further included. Also, some of the elements of the computing device according to the present disclosure can be combined to form one entity, thereby equally performing the functions of the relevant elements before the combination.

The method 10 is, optionally, governed by instructions that are stored in computer memory or a non-transitory computer readable storage medium (e.g., memory) and are executed by one or more processors (e.g., processors units) of one or more computer devices. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 10 is described as being performed by a computer system, although in some embodiments, various operations of method 10 are distributed across separate computer systems

## Claims

**1.** A computer-implemented method (10) for geophysical data mining, the method comprising:

a) receiving (100), by a processor, a first survey data representative of a subsurface volume of interest and a second survey data representative of the subsurface volume of interest, wherein the first survey data and the second survey data are acquired at different survey times; wherein each of the first survey data and the second survey data comprise a plurality of data-points (4), wherein the plurality of data-points (4) are arranged in a data matrix with $N_W$ columns and $N_S$ rows, each data-point (2) of the plurality of data-points (4) is associated to a j-th column (2a) of the data matrix representing a position $x_j$ (1a) along a x-axis and to an i-th row (2b) of the data matrix representing a position $t_i$ (1b) along a t-axis;
b) estimating (110), by a processor, an error distribution matrix for the plurality of data-points of the first survey data, wherein each element of the matrix is based on a standard deviation matrix and a correlation matrix of each data-point of the first survey data;
c) generating (120), by a processor, a current error model by partitioning the error distribution matrix in a number of rectangular cells, wherein the current model is defined by error model parameters, and wherein the error model parameters comprise the number of rectangular cells and, for each rectangular cell of the number of rectangular cells, a position on the x-axis of the center of the each rectangular cell (3a), a size in the x-axis of the each rectangular cell (3e), a position on the t-axis of the center of the each rectangular cell (3b), a size in the t-axis of the each cell (3d), and a weight of each cell, wherein the weights define a likelihood function of the second survey data with respect to the first survey data ;
d) modifying (130), by a processor, the error model parameters of the current error model to generate a candidate

error model based on a probability condition, wherein the probability condition defines a probability of occurrence of a way of modifying the error model parameters of the current error model;
e) storing (140), in a memory, the error model parameters of the candidate error model as one element of a Markov Chain based on a result of comparing a likelihood value of the current error model and a likelihood value of the candidate error model, wherein both likelihood values are based on a difference between a magnitude of the data points of first survey and the second survey;
f) repeating (150), by a processor, steps d) (130) and e) (140) as the candidate error model being the current error model, until convergence of the Markov Chain; and
g) generating (160), by a processor, a probability weight map using a plurality of partition models generated by assigning a weight to each of the plurality of data-points based on the error model parameters of the candidate error models which form the Markov Chain.

**2.** The computer-implemented method of claim 1, wherein the covariance matrix is obtained by:

- calculating a diagonal matrix based on the standard deviation of each data-point of the first survey data;
- calculating a correlation matrix based on the correlation within each of the traces of the first survey data with a number of consecutive traces around each of the traces of the first survey data, wherein the correlation matrix is a block-diagonal matrix, comprising a number of blocks equal to $N_w$; and
- obtaining the covariance matrix based on the diagonal matrix and the correlation matrix.

**3.** The computer-implemented method of claim 2, wherein the first survey data is a first seismic survey data and the second survey data is a second seismic survey data.

**4.** The computer-implemented method of claim 3, wherein a block of the correlation matrix is given by

$$\boldsymbol{R}_j = R_{ik,j} = e^{-\lambda_j|t_i-t_k|} cos(\lambda_j \omega_j |t_i - t_k|)$$

where j represents a j-th column among the Nw columns in the first survey data; $t_k$ and $t_i$ are the k-th row and i-th row, respectively, of the j-th column; $\lambda_j$ and $\omega_j$ are autocorrelation parameters of data-points in the j-th column obtained by considering data-points of a number of consecutive columns around the j-th column.

**5.** The computer-implemented method of claim 4, wherein the number of consecutive columns around the j-th column is a number between 4 and 10.

**6.** The computer-implemented method of claim 1, wherein the number of cells is a number between 1 and 200.

**7.** The computer-implemented method of claim 1, wherein modifying the error model parameters of the current error model to generate a candidate error model based on a probability condition comprises:

- modifying the error model parameters of the current error model by performing a move among a list of moves, wherein each move has a probability condition to occur,
- wherein the list of moves comprises: modifying a position in the x-axis of a center of one cell, modifying a size in the x-axis of one cell, modifying a position in the t-axis of a center of one cell, modifying a size in the t-axis of one cell, modifying the weight of one cell, adding a new cell, and deleting one cell.

**8.** The computer-implemented method of claim 7, wherein modifying the position in the x-axis of the center of one cell has a probability condition to occur equal to 0.15, wherein modifying the size in the x-axis of the one cell has a probability condition to occur equal to 0.15, wherein modifying the position in the t-axis of the center of one cell has a probability condition to occur equal to 0.15, wherein modifying the size in the t-axis of one cell has a probability condition to occur equal to 0.15, wherein modifying the weight of one cell has a probability condition to occur equal to 0.2, wherein adding a new cell has a probability condition to occur equal to 0.1, and wherein deleting one cell has a probability condition to occur equal to 0.1.

**9.** The computer-implemented method of claim 8, wherein Markov Chain Monte Carlo (MCMC) sampling is used to generate the model parameters that form the Markov Chain.

**10.** The computer-implemented method of claim 1, wherein the likelihood value is calculated based on a likelihood

function, the likelihood function being:

$$L(\mathbf{m}) = \prod_{i=1}^{N_w} \frac{1}{\left[(2\pi)^{N_s}|\mathbf{C}_{\mathrm{e,ij}}|\right]^{1/2}} exp\left(-\frac{1}{2}\mathbf{e}_{\mathrm{ij}}^{\mathrm{T}} \cdot \mathbf{C}_{\mathrm{e,ij}}^{-1} \cdot \mathbf{e}_{\mathrm{ij}}\right) \text{ where } \mathbf{C} = \mathbf{W}_{\mathrm{e,ij}}^{\mathrm{T}} \cdot \mathbf{C}_{\mathrm{e,ij}}^{*} \cdot \mathbf{W}_{\mathrm{e,ij}}$$

wherein C* represents an error distribution of each of the plurality of data-points of the first survey data, e is the difference between the magnitude of the data points of first survey and the second survey.

**11.** The computer-implemented method of claim 1, wherein generating a probability weight map is based on a mean value of the weight of each cell of all the models which form the Markov Chain.

**12.** The computer-implemented method of claim 1, wherein each of the plurality of partition models generated by assigning a weight to each of the plurality of data-points based on the error model parameters of the candidate error model is generated by

$$\boldsymbol{W_{ij}}(\boldsymbol{m}) = 10^{w_{ij}(\boldsymbol{m})} \quad \text{where} \quad w_{ij}(\boldsymbol{m}) = \sum_{m=1}^{n} \pi_m \quad if \quad x_{ij} \in \mathcal{C}_m$$

where $w_{ij}(\boldsymbol{m})$ is a weight associated to a data-point $x_{ij}$, $\pi_n$ is a weight of a cell $\mathcal{C}_m$, n is the number of cells in the model m, and $\mathcal{C}_m$ represents a position on the x-axis of the center of a m-th cell, a size in the x-axis of a m-th cell, a position on a t-axis of the center of a m-th cell and a size in the t-axis of a m-th cell.

**13.** An electronic device comprising at least one memory and at least one processor, the at least one processor configured to perform steps of a method, the method being the method of any of claims 1 to 12.

**14.** A non-transitory computer-readable recording medium having recorded thereon a computer program code for executing a method for geophysical data mining, which, when executed by a processor, cause the processor to perform steps of the method, the method being the method of any of claims 1 to 12.

## Patentansprüche

**1.** Computerimplementiertes Verfahren (10) für geophysikalisches Data Mining, wobei das Verfahren umfasst:

a) Empfangen (100), durch einen Prozessor, von ersten Untersuchungsdaten, die repräsentativ für ein unterirdisches Volumen von Interesse sind, und von zweiten Untersuchungsdaten, die repräsentativ für das unterirdische Volumen von Interesse sind, wobei die ersten Untersuchungsdaten und die zweiten Untersuchungsdaten zu unterschiedlichen Untersuchungszeiten erfasst werden; wobei sowohl die ersten Untersuchungsdaten als auch die zweiten Untersuchungsdaten eine Vielzahl von Datenpunkten (4) umfassen, wobei die Vielzahl von Datenpunkten (4) in einer Datenmatrix mit $N_W$ Spalten und $N_S$ Zeilen angeordnet sind, wobei jeder Datenpunkt (2) der Vielzahl von Datenpunkten (4) einer j-ten Spalte (2a) der Datenmatrix, die eine Position $X_j$ (1a) entlang einer x-Achse darstellt, und einer i-ten Zeile (2b) der Datenmatrix, die eine Position $t_i$ (1 b) entlang einer t-Achse darstellt, zugeordnet ist;
b) Schätzen (110), durch einen Prozessor, einer Fehlerverteilungsmatrix für die Vielzahl von Datenpunkten der ersten Untersuchungsdaten, wobei jedes Element der Matrix auf einer Standardabweichungsmatrix und einer Korrelationsmatrix jedes Datenpunktes der ersten Untersuchungsdaten basiert;
c) Erzeugen (120), durch einen Prozessor, eines aktuellen Fehlermodells durch Partitionieren der Fehlerverteilungsmatrix in eine Anzahl von rechteckigen Zellen, wobei das aktuelle Modell durch Fehlermodellparameter definiert ist, und wobei die Fehlermodellparameter die Anzahl von rechteckigen Zellen und, für jede rechteckige Zelle der Anzahl von rechteckigen Zellen, eine Position auf der x-Achse des Zentrums jeder rechteckigen Zelle (3a), eine Größe in der x-Achse jeder rechteckigen Zelle (3e), eine Position auf der t-Achse des Zentrums jeder rechteckigen Zelle (3b), eine Größe in der t-Achse jeder Zelle (3d) und ein Gewicht jeder Zelle umfassen, wobei die Gewichte eine Likelihood-Funktion der zweiten Untersuchungsdaten in Bezug auf die ersten Untersuchungsdaten definieren;
d) Modifizieren (130), durch einen Prozessor, der Fehlermodellparameter des aktuellen Fehlermodells, um ein

Kandidatenfehlermodell basierend auf einer Wahrscheinlichkeitsbedingung zu erzeugen, wobei die Wahrscheinlichkeitsbedingung eine Wahrscheinlichkeit des Auftretens einer Art der Modifikation der Fehlermodellparameter des aktuellen Fehlermodells definiert;

e) Speichern (140), in einem Speicher, der Fehlermodellparameter des Kandidatenfehlermodells als ein Element einer Markov-Kette basierend auf einem Ergebnis eines Vergleichs eines Likelihood-Wertes des aktuellen Fehlermodells und eines Likelihood-Wertes des Kandidatenfehlermodells, wobei beide Likelihood-Werte auf einer Differenz zwischen einer Größe der Datenpunkte der ersten Untersuchung und der zweiten Untersuchung basieren;

f) Wiederholen (150), durch einen Prozessor, der Schritte d) (130) und e) (140), wobei das Kandidatenfehlermodell das aktuelle Fehlermodell ist, bis zur Konvergenz der Markov-Kette; und

g) Erzeugen (160), durch einen Prozessor, einer Wahrscheinlichkeitsgewichtskarte unter Verwendung einer Vielzahl von Partitionsmodellen, die durch Zuweisen eines Gewichts zu jedem der Vielzahl von Datenpunkten basierend auf den Fehlermodellparametern der Kandidatenfehlermodelle, die die Markov-Kette bilden, erzeugt werden.

**2.** Computerimplementiertes Verfahren nach Anspruch 1, wobei die Kovarianzmatrix erhalten wird durch:

- Berechnen einer Diagonalmatrix basierend auf der Standardabweichung jedes Datenpunktes der ersten Untersuchungsdaten;
- Berechnen einer Korrelationsmatrix basierend auf der Korrelation innerhalb jeder der Spuren der ersten Untersuchungsdaten mit einer Anzahl von aufeinanderfolgenden Spuren um jede der Spuren der ersten Untersuchungsdaten, wobei die Korrelationsmatrix eine Blockdiagonalmatrix ist, die eine Anzahl von Blöcken gleich $N_W$ umfasst; und
- Erhalten der Kovarianzmatrix basierend auf der Diagonalmatrix und der Korrelationsmatrix.

**3.** Computerimplementiertes Verfahren nach Anspruch 2, wobei die ersten Untersuchungsdaten erste seismische Untersuchungsdaten sind und die zweiten Untersuchungsdaten zweite seismische Untersuchungsdaten sind.

**4.** Computerimplementiertes Verfahren nach Anspruch 3, wobei ein Block der Korrelationsmatrix gegeben ist durch

$$\boldsymbol{R}_j = R_{ik,j} = e^{-\lambda_j |t_i - t_k|} \cos\left(\lambda_j \omega_j |t_i - t_k|\right)$$

wobei j eine j-te Spalte unter den $N_W$ Spalten in den ersten Untersuchungsdaten darstellt; $t_k$ und $t_i$ die k-te Zeile bzw. i-te Zeile der j-ten Spalte sind; $\lambda_j$ und $\omega_j$ Autokorrelationsparameter von Datenpunkten in der j-ten Spalte sind, die durch Berücksichtigen von Datenpunkten einer Anzahl von aufeinanderfolgenden Spalten um die j-te Spalte erhalten werden.

**5.** Computerimplementiertes Verfahren nach Anspruch 4, wobei die Anzahl von aufeinanderfolgenden Spalten um die j-te Spalte eine Zahl zwischen 4 und 10 ist.

**6.** Computerimplementiertes Verfahren nach Anspruch 1, wobei die Anzahl der Zellen eine Zahl zwischen 1 und 200 ist.

**7.** Computerimplementiertes Verfahren nach Anspruch 1, wobei das Modifizieren der Fehlermodellparameter des aktuellen Fehlermodells, um ein Kandidatenfehlermodell basierend auf einer Wahrscheinlichkeitsbedingung zu erzeugen, umfasst:

- Modifizieren der Fehlermodellparameter des aktuellen Fehlermodells durch Durchführen eines Zuges aus einer Liste von Zügen, wobei jeder Zug eine Wahrscheinlichkeitsbedingung für das Auftreten hat,
- wobei die Liste von Zügen umfasst: Modifizieren einer Position in der x-Achse eines Zentrums einer Zelle, Modifizieren einer Größe in der x-Achse einer Zelle, Modifizieren einer Position in der t-Achse eines Zentrums einer Zelle, Modifizieren einer Größe in der t-Achse einer Zelle, Modifizieren des Gewichts einer Zelle, Hinzufügen einer neuen Zelle, und Löschen einer Zelle.

**8.** Computerimplementiertes Verfahren nach Anspruch 7, wobei das Modifizieren der Position in der x-Achse des Zentrums einer Zelle eine Wahrscheinlichkeitsbedingung für das Auftreten von 0,15 hat, wobei das Modifizieren der Größe in der x-Achse der einen Zelle eine Wahrscheinlichkeitsbedingung für das Auftreten von 0,15 hat, wobei das Modifizieren der Position in der t-Achse des Zentrums einer Zelle eine Wahrscheinlichkeitsbedingung für das

Auftreten von 0,15 hat, wobei das Modifizieren der Größe in der t-Achse einer Zelle eine Wahrscheinlichkeitsbedingung für das Auftreten von 0,15 hat, wobei das Modifizieren des Gewichts einer Zelle eine Wahrscheinlichkeitsbedingung für das Auftreten von 0,2 hat, wobei das Hinzufügen einer neuen Zelle eine Wahrscheinlichkeitsbedingung für das Auftreten von 0,1 hat, und wobei das Löschen einer Zelle eine Wahrscheinlichkeitsbedingung für das Auftreten von 0,1 hat.

**9.** Computerimplementiertes Verfahren nach Anspruch 8, wobei Markov-Ketten-Monte-Carlo (MCMC)-Sampling verwendet wird, um die Modellparameter, die die Markov-Kette bilden, zu erzeugen.

**10.** Computerimplementiertes Verfahren nach Anspruch 1, wobei der Likelihood-Wert basierend auf einer Likelihood-Funktion berechnet wird, wobei die Likelihood-Funktion lautet:

$$L(\boldsymbol{m}) = \prod_{i=1}^{N_W} \frac{1}{\left[(2\pi)^{N_s}\left|\boldsymbol{C}_{e,ij}\right|\right]^{1/2}} exp\left(-\frac{1}{2}\boldsymbol{e}_{ij}^T \cdot \boldsymbol{C}_{e,ij}^{-1} \cdot e_{ij}\right) \text{ wobei } \boldsymbol{C} = \boldsymbol{W}_{e,ij}^T \cdot \boldsymbol{C}_{e,ij}^* \cdot \boldsymbol{W}_{e,ij}$$

wobei C* eine Fehlerverteilung jedes der Vielzahl von Datenpunkten der ersten Untersuchungsdaten darstellt, e die Differenz zwischen der Größe der Datenpunkte der ersten Untersuchung und der zweiten Untersuchung ist.

**11.** Computerimplementiertes Verfahren nach Anspruch 1, wobei das Erzeugen einer Wahrscheinlichkeitsgewichtskarte auf einem Mittelwert des Gewichts jeder Zelle aller Modelle, die die Markov-Kette bilden, basiert.

**12.** Computerimplementiertes Verfahren nach Anspruch 1, wobei jedes der Vielzahl von Partitionsmodellen, die durch Zuweisen eines Gewichts zu jedem der Vielzahl von Datenpunkten basierend auf den Fehlermodellparametern des Kandidatenfehlermodells erzeugt werden, erzeugt wird durch

$$\boldsymbol{W}_{ij}(\boldsymbol{m}) = 10^{w_{ij}(\boldsymbol{m})} \text{ wobei } w_{ij}(\boldsymbol{m}) = \sum_{m=1}^{n} \pi_m \text{ wenn } x_{ij} \in \mathcal{C}_m$$

wobei $w_{ij}(\mathbf{m})$ ein Gewicht ist, das einem Datenpunkt $\chi_{ij}$ zugeordnet ist, $\pi_n$ ein Gewicht einer Zelle $\mathcal{C}_m$ ist, n die Anzahl der Zellen im Modell **m** ist, und $\mathcal{C}_m$ eine Position auf der x-Achse des Zentrums einer m-ten Zelle, eine Größe in der x-Achse einer m-ten Zelle, eine Position auf einer t-Achse des Zentrums einer m-ten Zelle und eine Größe in der t-Achse einer m-ten Zelle darstellt.

**13.** Elektronische Vorrichtung mit wenigstens einem Speicher und wenigstens einem Prozessor, wobei der wenigstens eine Prozessor dazu eingerichtet ist, Schritte eines Verfahrens durchzuführen, wobei das Verfahren das Verfahren nach einem der Ansprüche 1 bis 12 ist.

**14.** Nichtflüchtiges, computerlesbares Aufzeichnungsmedium, auf dem ein Computerprogrammcode zum Ausführen eines Verfahrens für geophysikalisches Data Mining aufgezeichnet ist, der, wenn er von einem Prozessor ausgeführt wird, den Prozessor veranlasst, Schritte des Verfahrens durchzuführen, wobei das Verfahren das Verfahren nach einem der Ansprüche 1 bis 12 ist.

## Revendications

**1.** - Procédé mis en œuvre par ordinateur (10) pour une exploration de données géophysiques, le procédé comprenant :

a) la réception (100), par un processeur, de premières données de relevé représentatives d'un volume souterrain d'intérêt et de secondes données de relevé représentatives du volume souterrain d'intérêt, les premières données de relevé et les secondes données de relevé étant acquises à des dates de relevé différentes ; chacun parmi les premières données de relevé et les secondes données de relevé comprenant une pluralité de points de données (4), la pluralité de points de données (4) étant disposés dans une matrice de données à Nw colonnes et Ns lignes, chaque point de données (2) de la pluralité de points de données (4) étant associé à une $j^{ième}$ colonne (2a) de la matrice de données représentant une position $x_j$ (1a) suivant un axe x et à une $i^{ième}$ ligne (2b) de la matrice de données représentant une position $t_i$ (1b) suivant un axe t ;

b) l'estimation (110), par un processeur, d'une matrice de distribution d'erreur pour la pluralité de points de données des premières données de relevé, chaque élément de la matrice étant basé sur une matrice d'écart-type et une matrice de corrélation de chaque point de données des premières données de relevé ;

c) la génération (120), par un processeur, d'un modèle actuel d'erreur par partitionnement de la matrice de distribution d'erreur en un nombre de cellules rectangulaires, le modèle actuel étant défini par des paramètres de modèle d'erreur, et les paramètres de modèle d'erreur comprenant le nombre de cellules rectangulaires et, pour chaque cellule rectangulaire du nombre de cellules rectangulaires, une position sur l'axe x du centre de chaque cellule rectangulaire (3a), une taille dans l'axe x de chaque cellule rectangulaire (3e), une position sur l'axe t du centre de chaque cellule rectangulaire (3b), une taille dans l'axe t de chaque cellule (3d) et un poids de chaque cellule, les poids définissant une fonction de vraisemblance des secondes données de relevé par rapport aux premières données de relevé ;

d) la modification (130), par un processeur, des paramètres de modèle d'erreur du modèle actuel d'erreur pour générer un modèle d'erreur candidat sur la base d'une condition de probabilité, la condition de probabilité définissant une probabilité d'occurrence d'une manière de modifier les paramètres de modèle d'erreur du modèle actuel d'erreur ;

e) le stockage (140), dans une mémoire, des paramètres de modèle d'erreur du modèle d'erreur candidat en tant qu'élément d'une Chaîne de Markov sur la base d'un résultat de comparaison d'une valeur de vraisemblance du modèle actuel d'erreur et d'une valeur de vraisemblance du modèle d'erreur candidat, les deux valeurs de vraisemblance étant basées sur une différence entre une grandeur des points de données du premier relevé et du second relevé ;

f) la répétition (150), par un processeur, des étapes d) (130) et e) (140) lorsque le modèle d'erreur candidat est le modèle actuel d'erreur, jusqu'à la convergence de la Chaîne de Markov ;

g) la génération (160), par un processeur, d'une carte de poids de probabilité à l'aide d'une pluralité de modèles de partitions générés par attribution d'un poids à chacun de la pluralité de points de données sur la base des paramètres de modèle d'erreur des modèles d'erreur candidats qui forment la Chaîne de Markov.

**2.** - Procédé mis en œuvre par ordinateur selon la revendication 1, dans lequel la matrice de covariance est obtenue par :

- le calcul d'une matrice diagonale sur la base de l'écart-type de chaque point de données des premières données de relevé ;
- le calcul d'une matrice de corrélation sur la base de la corrélation dans chacune des traces des premières données de relevé avec un nombre de traces consécutives autour de chacune des traces des premières données de relevé, la matrice de corrélation étant une matrice diagonale par blocs, comprenant un nombre de blocs égal à $N_w$ ; et
- l'obtention de la matrice de covariance sur la base de la matrice diagonale et de la matrice de corrélation.

**3.** - Procédé mis en œuvre par ordinateur selon la revendication 2, dans lequel les premières données de relevé sont des premières données de relevé sismique et les secondes données de relevé sont des secondes données de relevé sismique.

**4.** - Procédé mis en œuvre par ordinateur selon la revendication 3, dans lequel un bloc de la matrice de corrélation est donné par

$$\boldsymbol{R}_j = R_{ik,j} = e^{-\lambda_j |t_i - t_k|} cos(\lambda_j \omega_j |t_i - t_k|)$$

où j représente une $j^{ième}$ colonne parmi les Nw colonnes dans les premières données de relevé ; $t_k$ et $t_i$ sont respectivement la $k^{ième}$ ligne et la $i^{ième}$ ligne de la $j^{ième}$ colonne ; $\lambda_j$ et $\omega_j$ sont des paramètres d'autocorrélation de points de données dans la $j^{ième}$ colonne obtenus en considérant des points de données d'un nombre de colonnes consécutives autour de la $j^{ième}$ colonne.

**5.** - Procédé mis en œuvre par ordinateur selon la revendication 4, dans lequel le nombre de colonnes consécutives autour de la $j^{ième}$ colonne est un nombre entre 4 et 10.

**6.** - Procédé mis en œuvre par ordinateur selon la revendication 1, dans lequel le nombre de cellules est un nombre entre 1 et 200.

**7.** - Procédé mis en œuvre par ordinateur selon la revendication 1, dans lequel la modification des paramètres de modèle d'erreur du modèle actuel d'erreur pour générer un modèle d'erreur candidat sur la base d'une condition de probabilité comprend :

- la modification des paramètres de modèle d'erreur du modèle actuel d'erreur par réalisation d'un déplacement parmi une liste de déplacements, chaque déplacement ayant une condition de probabilité pour se produire,
- la liste de déplacements comprenant : la modification d'une position dans l'axe x d'un centre d'une cellule, la modification d'une taille dans l'axe x d'une cellule, la modification d'une position dans l'axe t d'un centre d'une cellule, la modification d'une taille dans l'axe t d'une cellule, la modification du poids d'une cellule, l'ajout d'une nouvelle cellule et la suppression d'une cellule.

**8.** - Procédé mis en œuvre par ordinateur selon la revendication 7, dans lequel la modification de la position dans l'axe x du centre d'une cellule a une condition de probabilité pour se produire égale à 0,15, dans lequel la modification de la taille dans l'axe x d'une cellule a une condition de probabilité pour se produire égale à 0,15, dans lequel la modification de la position dans l'axe t du centre d'une cellule a une condition de probabilité pour se produire égale à 0,15, dans lequel la modification de la taille dans l'axe t d'une cellule a une condition de probabilité pour se produire égale à 0,15, dans lequel la modification du poids d'une cellule a une condition de probabilité pour se produire égale à 0,2, dans lequel l'ajout d'une nouvelle cellule a une condition de probabilité pour se produire égale à 0,1 et dans lequel la suppression d'une cellule a une condition de probabilité pour se produire égale à 0,1.

**9.** - Procédé mis en œuvre par ordinateur selon la revendication 8, dans lequel un échantillonnage de Monte Carlo par Chaîne de Markov (MCMC) est utilisé pour générer les paramètres de modèle qui forment la Chaîne de Markov.

**10.** - Procédé mis en œuvre par ordinateur selon la revendication 1, dans lequel la valeur de vraisemblance est calculée sur la base d'une fonction de vraisemblance, la fonction de vraisemblance étant :

$$L(\mathbf{m}) = \prod_{i=1}^{N_w} \frac{1}{\left[(2\pi)^{N_s}\left|\mathbf{C}_{\mathrm{e,ij}}\right|\right]^{1/2}} exp\left(-\frac{1}{2}\mathbf{e}_{\mathrm{ij}}^{\mathrm{T}} \cdot \mathbf{C}_{\mathrm{e,ij}}^{-1} \cdot \mathbf{e}_{\mathrm{ij}}\right)$$

où

$$\mathbf{C} = \mathbf{W}_{\mathrm{e,ij}}^{\mathrm{T}} \cdot \mathbf{C}_{\mathrm{e,ij}}^{*} \cdot \mathbf{W}_{\mathrm{e,ij}}$$

où **C*** représente une distribution d'erreur de chacun de la pluralité de points de données des premières données de relevé, e est la différence entre la grandeur des points de données du premier relevé et du second relevé.

**11.** - Procédé mis en œuvre par ordinateur selon la revendication 1, dans lequel la génération d'une carte de poids de probabilité est basée sur une valeur moyenne du poids de chaque cellule de tous les modèles qui forment la Chaîne de Markov.

**12.** - Procédé mis en œuvre par ordinateur selon la revendication 1, dans lequel chacun de la pluralité de modèles de partitions générés par attribution d'un poids à chacun de la pluralité de points de données sur la base des paramètres de modèle d'erreur du modèle d'erreur candidat est généré par

$$\boldsymbol{W_{ij}}(\boldsymbol{m}) = 10^{w_{ij}(\boldsymbol{m})}$$

où

$$w_{ij}(\boldsymbol{m}) = \sum_{m=1}^{n} \pi_m$$

si

$$x_{ij} \in \mathcal{C}_m$$

où $w_{ij}(\boldsymbol{m})$ est un poids associé à un point de données $x_{ij}$, $\pi_n$ est un poids d'une cellule $\mathcal{C}_m$, n est le nombre de cellules dans le modèle **m,** et $\mathcal{C}_m$ représente une position sur l'axe x du centre d'une m$^{ième}$ cellule, une taille dans l'axe x d'une m$^{ième}$ cellule, une position sur un axe t du centre d'une m$^{ième}$ cellule et une taille dans l'axe t d'une m$^{ième}$ cellule.

**13.** - Dispositif électronique comprenant au moins une mémoire et au moins un processeur, ledit au moins un processeur étant configuré pour effectuer des étapes d'un procédé, le procédé étant le procédé selon l'une quelconque des revendications 1 à 12.

**14.** - Support d'enregistrement lisible par ordinateur non transitoire sur lequel est enregistré un code de programme

informatique pour l'exécution d'un procédé d'exploration de données géophysiques, qui, lorsqu'il est exécuté par un processeur, amène le processeur à effectuer des étapes du procédé, le procédé étant le procédé selon l'une quelconque des revendications 1 à 12.

Fig. 1

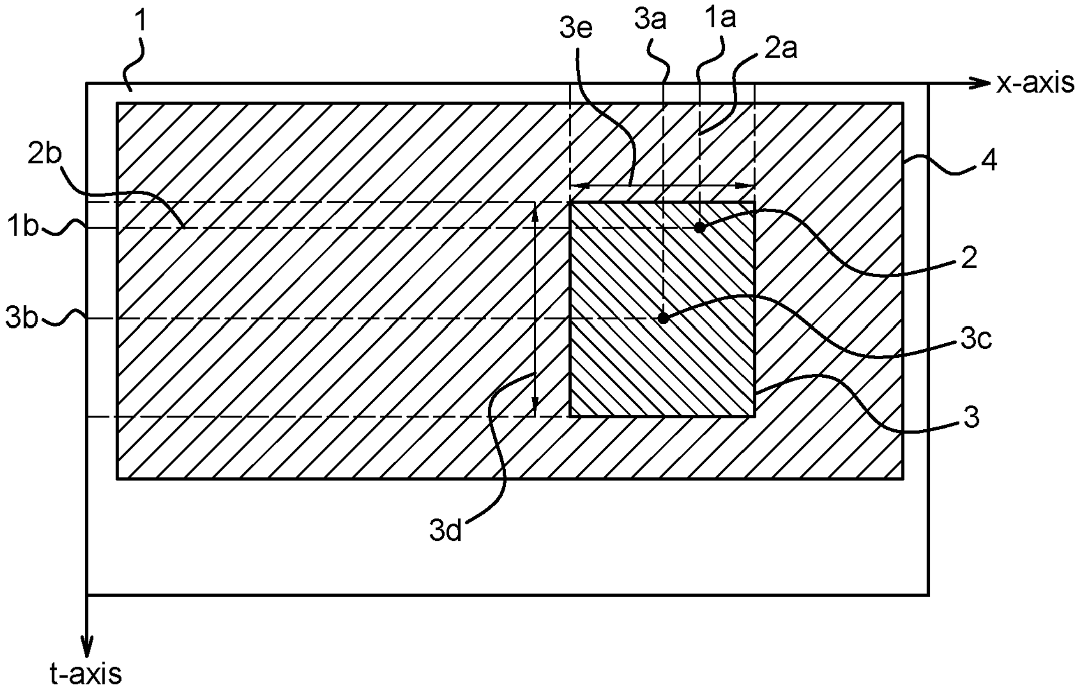

Fig. 2

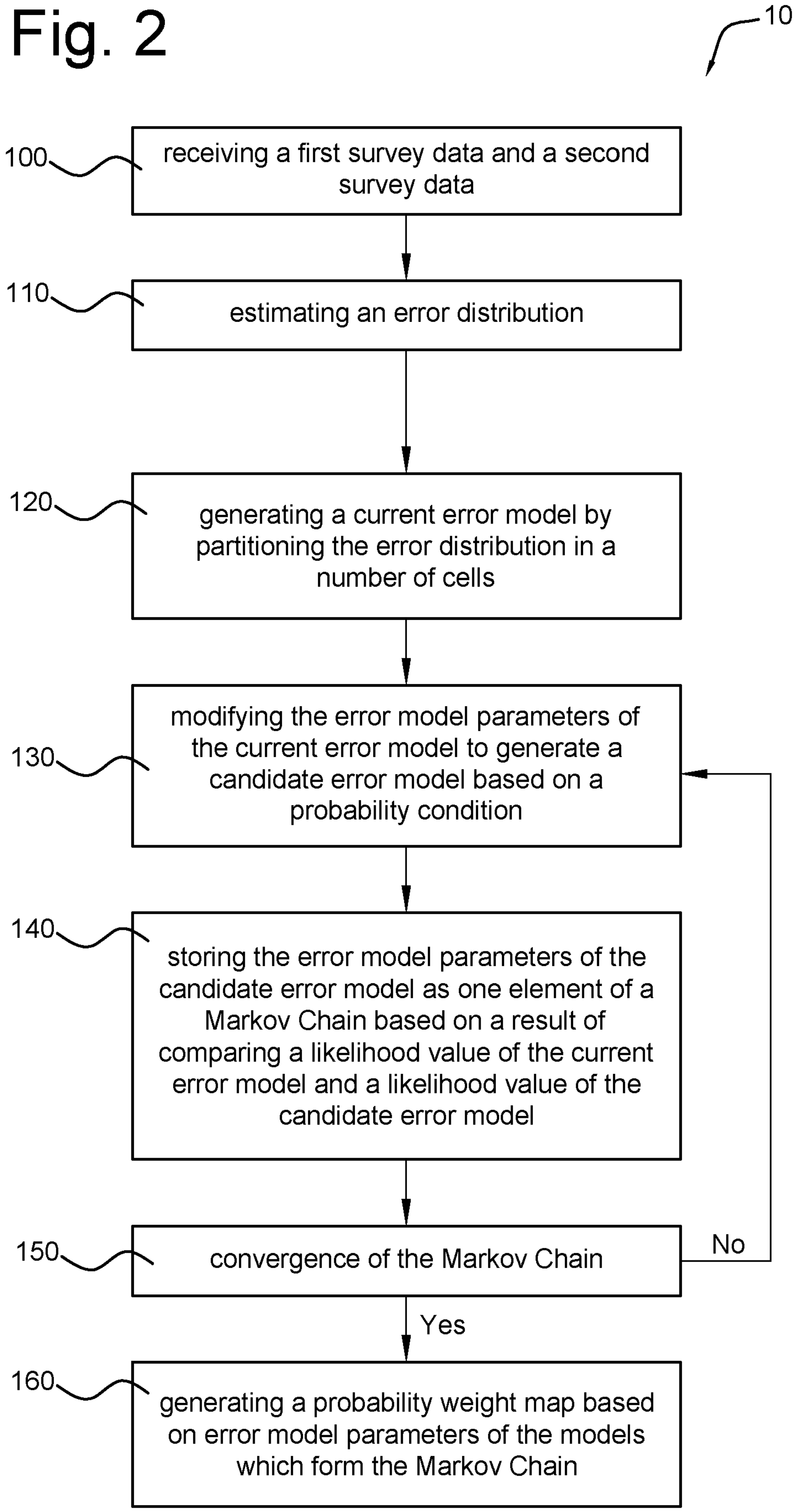
10
100
receiving a first survey data and a second survey data
110
estimating an error distribution
120
generating a current error model by partitioning the error distribution in a number of cells
130
modifying the error model parameters of the current error model to generate a candidate error model based on a probability condition
140
storing the error model parameters of the candidate error model as one element of a Markov Chain based on a result of comparing a likelihood value of the current error model and a likelihood value of the candidate error model
150
convergence of the Markov Chain
No
Yes
160
generating a probability weight map based on error model parameters of the models which form the Markov Chain

Fig. 3A

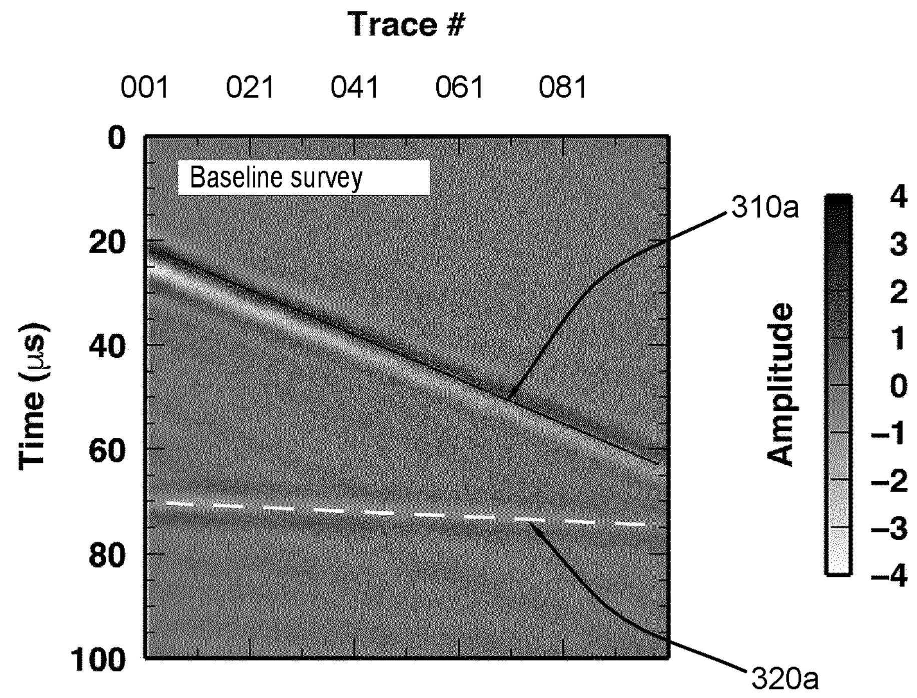
Trace #
001
021
041
061
081
Baseline survey
Time (μs)
0
20
40
60
80
100
310a
320a
Amplitude
4
3
2
1
0
−1
−2
−3
−4

Fig. 3B

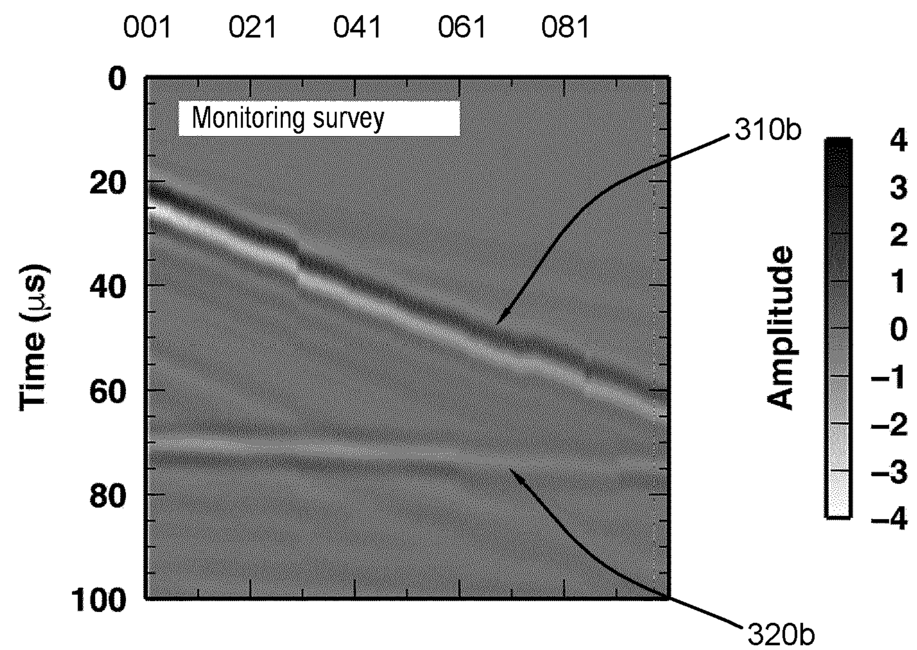
001
021
041
061
081
Monitoring survey
Time (μs)
0
20
40
60
80
100
310b
320b
Amplitude
4
3
2
1
0
−1
−2
−3
−4

Fig. 4A

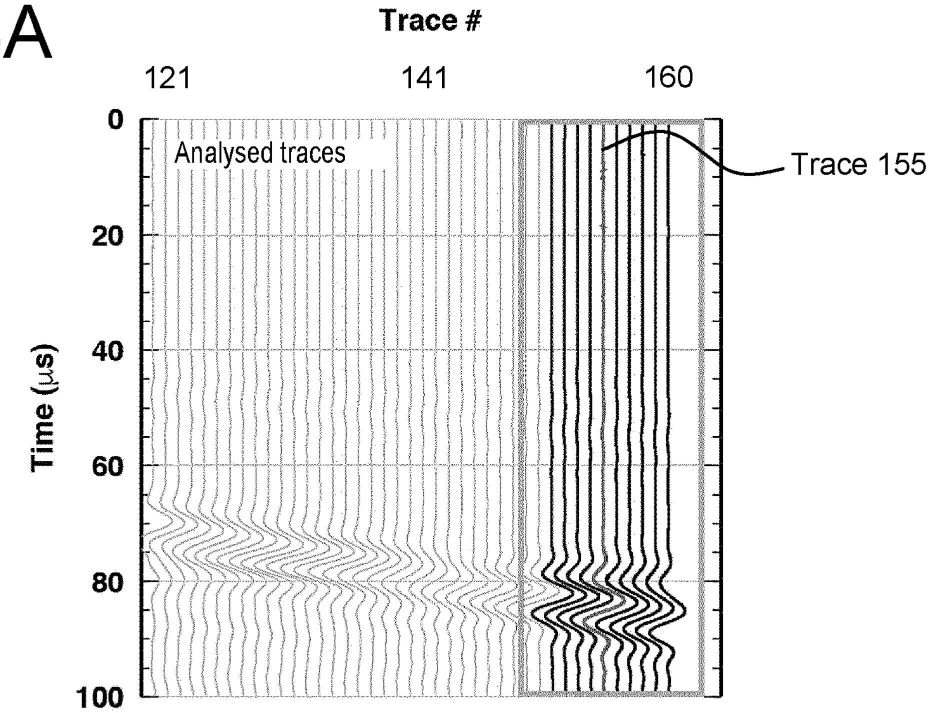


Fig. 4B

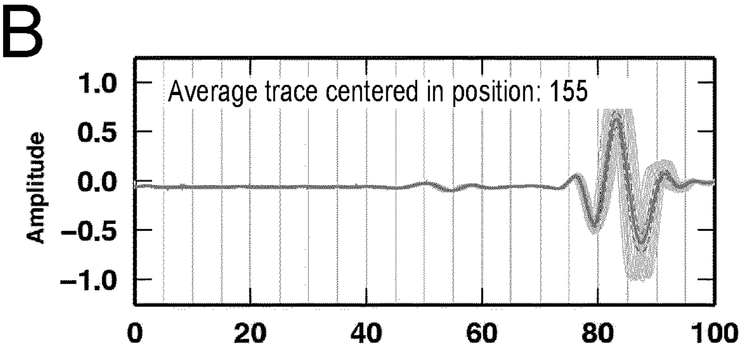


Fig. 4C

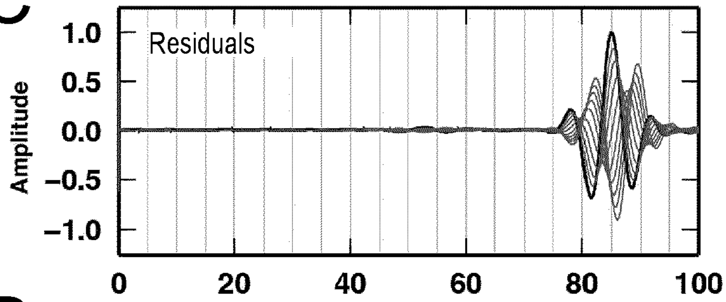


Fig. 4D

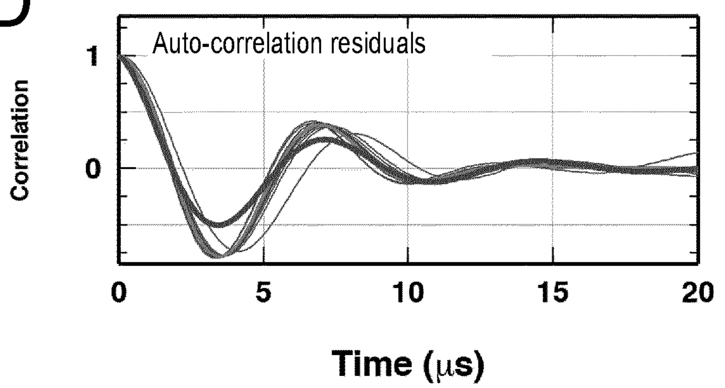

Fig. 5

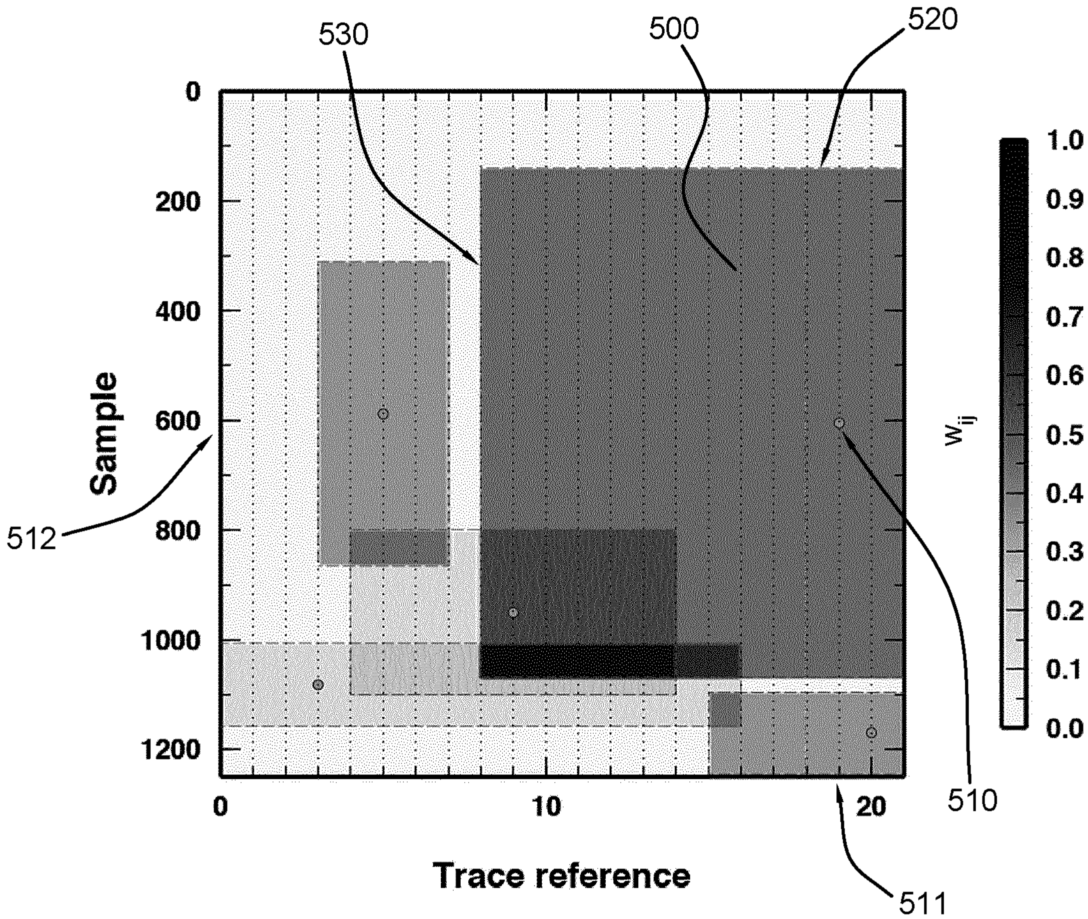
530
500
520
0
200
400
600
800
1000
1200
Sample
512
0
10
20
Trace reference
510
511
1.0
0.9
0.8
0.7
0.6
0.5
0.4
0.3
0.2
0.1
0.0
$w_{ij}$

Fig. 6

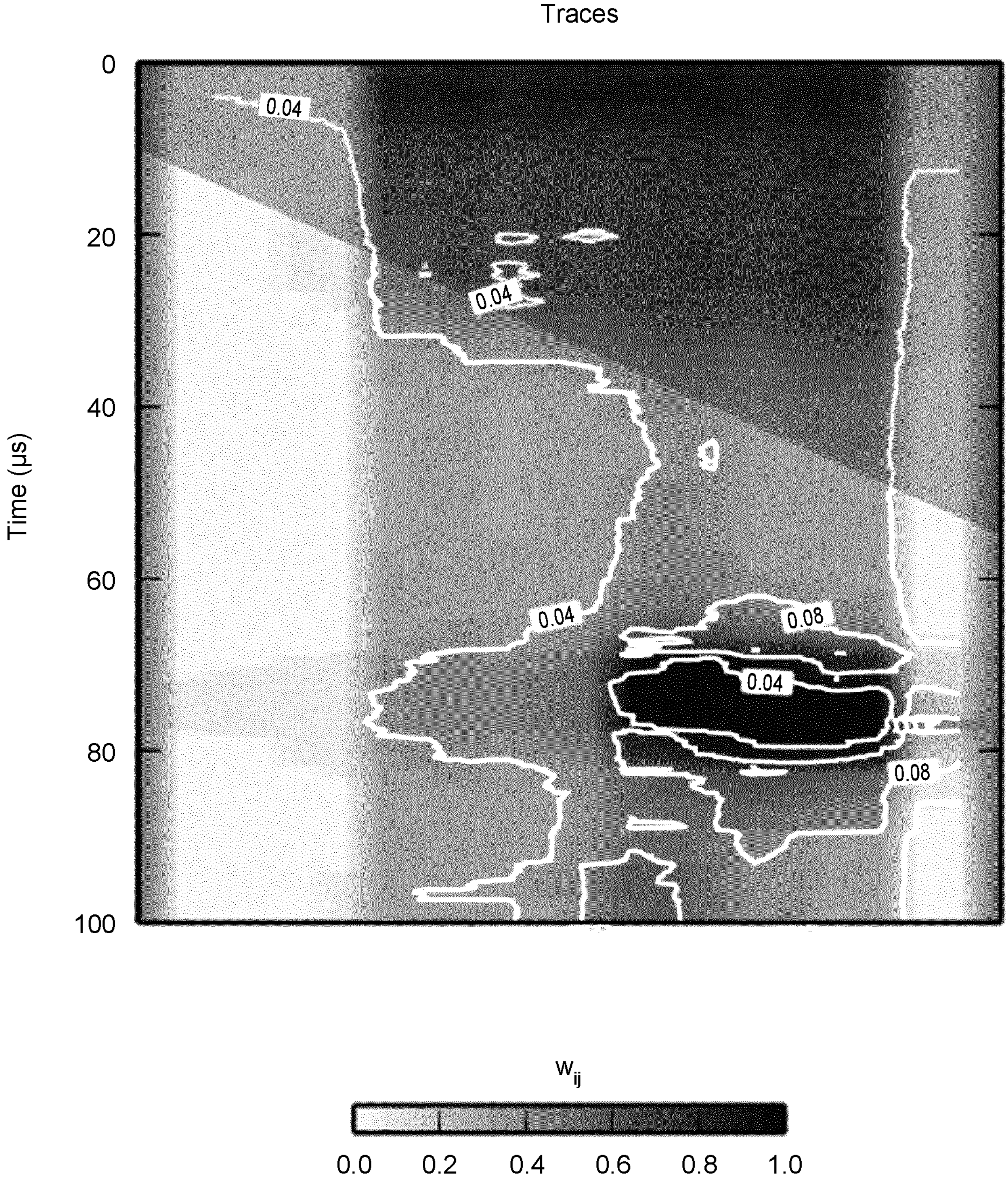
Traces
Time (μs)
0
20
40
60
80
100
0.04
0.04
0.04
0.08
0.04
0.08
$w_{ij}$
0.0
0.2
0.4
0.6
0.8
1.0

Fig. 7

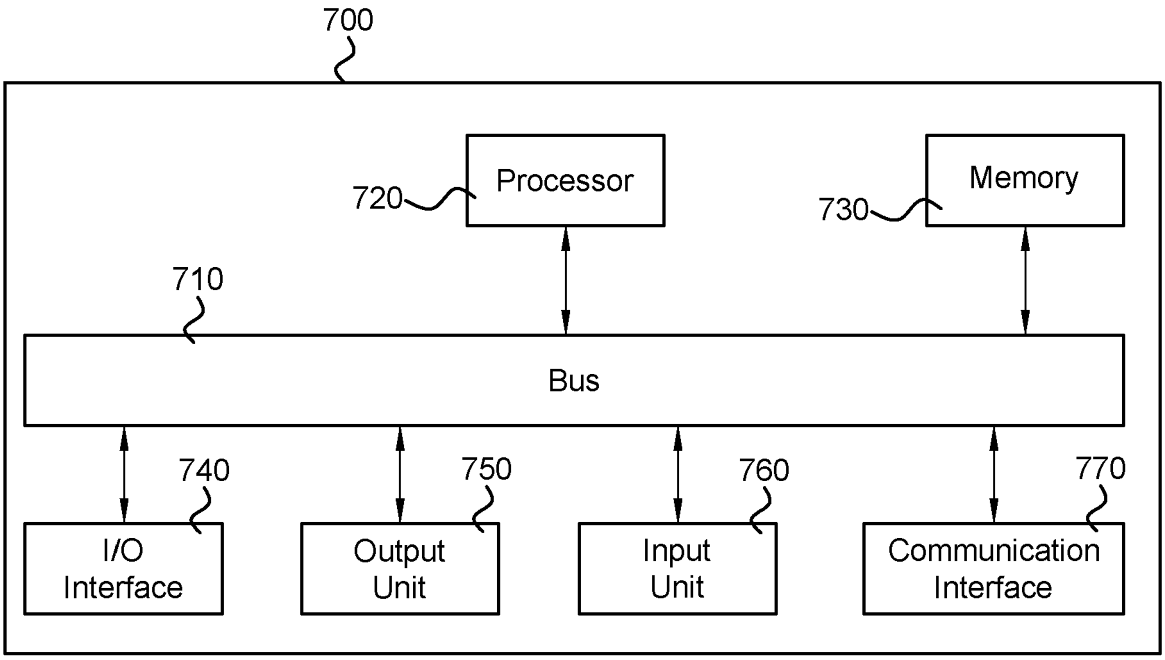
700
Processor
720
Memory
730
710
Bus
740
750
760
770
I/O
Interface
Output
Unit
Input
Unit
Communication
Interface

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2019011583 A1
- EP 3327468 A1
- US 2010185422 A1
- EP 3171203 A1
- WO 0048022 A1


### Non-patent literature cited in the description


- **MALINVERNO A.** Parsimonious Bayesian Markov chain Monte Carlo inversion in a nonlinear geophysical problem. *Geophysical Journal International*, 01 December 2002, vol. 151
- **XIANG E. et al.** Efficient hierarchical trans-dimensional Bayesian inversion of magnetotelluric data. *Geophysical Journal International*, 22 February 2018, vol. 213
- Estimation and uncertainty analysis of the CO2 storage volume in the sleipner field via 4D reversible-jump markov-chain Monte Carlo. **YONGCHAE C. et al.** Journal of petroleum science and engineering. ELSEVIER, 05 January 2021, vol. 200